# EUROPEAN PATENT APPLICATION

(11) **EP 1 434 330 A1**
(43) Date of publication of application: **30.06.2004**
(21) Application number: 02803734.9
(22) Date of filing: 06.09.2002
(51) Int. Cl.: H02K 1/06, H02K 1/12, H02K 1/22

(54) **RING MODE STARTER/GENERATOR**

(30) Priority: 08.09.2001 CN 01125696
(71) Applicant: He, Lei, Lanzhou, Gansu 730000 (CN)
(72) Inventor: He, Lei, Lanzhou, Gansu 730000 (CN)
(74) Representative: Sutcliffe, Nicholas Robert
(86) International application number: PCT/CN2002/000623
(87) International publication number: WO 2003/047068

(57) **Abstract**

A ring type starter/generator comprises ring shaped stator (1), ring shaped rotor (2, 3) and a set of large current-conversion controller with low power consumption. Ring shaped stator (1) is mounted on engine body or water pump housing, and ring shaped rotor (2, 3) is mounted on engine flywheel or pump impeller. With the help of new integrated electromechanical construction, constituted of shaft, bearings and housing of engine or pump machinery, starter/generator and engine or pump can operate coaxially and directly drive each other. Said ring type starter/generator changes and simplifies conventional construction of electric machinery and mechanical transmission mode of automobile, so that the association of electric machinery with engine is more reasonable and compact, realizing a highly efficient integrated mechanical and electrical construction, and improving to the utmost extent in reliability and working efficiency in transmission of electric machinery. In addition it has advantages of low working temperature, larger power in electric generation/power output, high efficiency, larger transmission torque as well as elimination of cooling device.

## Description

### FIELD OF THE INVENTION

The present invention relates to ring type starter/generator used in the field of various engines, electric hybrid-powered automobiles and cooling water pumps for automobiles.

### BACKGROUND OF THE INVENTION

At present, existing automotive motor/generators are all independent constructions consisted of rotating shaft, bearing, end cover and housing etc., of which transmission is accomplished by means of belt, gears or shaft. With development of national economics, progress of science & technology and advance in living standard, newer and higher requirements are presented to performance of electric machinery. Especially in the field of automotive engines, conventional type of air-cooled generator and electro-magnetically operated starter of independeht construction still prevails. Modem automobiles are developing in the direction of high power, light pollution, good economy and reliability as well as comfort and luxury. Demand for higher economy and electric power loading incessantly increases, so that starter, generator and 12V electric supply system of automobile no longer meets present-day requirement.

### SUMMARY OF THE INVENTION

The aim of present invention is to provide a simplified construction for conventional electric machines and mode of mechanical transmission of automotive engines, so that the association of electric machines with engines or automotive water pumps will be more reasonable and compact, realizing an integrated, efficient "electro-mechanical" starting and electric generation, reducing production costs, and improving as high as possible reliability and working efficiency of driving of electric machinery with an ideal ring type starter/generator.

To achieve afore-mentioned aim, the technical solution of present invention is as follows: a ring type starter/generator comprises: a ring shaped stator, a ring shaped rotor, and an engine or water pump, wherein said stator is mounted on an engine body or a housing of a flywheel of said engine or on a housing of said water pump, said rotor is mounted on said flywheel of said engine or on a impeller of said water pump, said stator faces said rotor, and said starter/generator further comprises a set of large current-conversion controller with low power consumption, which includes a control circuitry and a MOSFET grid-drive circuitry.

In the ring type starter/generator, said engine flywheel is mounted on an engine crankshaft through an unidirectional clutch, a permanent magnet coupling and a reset spring, an electro-magnetic control solenoid is provided on an end face of said stator, and said unidirectional clutch achieves the engagement and disengagement under the action of a like-polarity repelling force between said electromagnetic control solenoid and said permanent magnet coupling; and, two end faces of said flywheel are provided with bearings respectively, seats of said bearings are mounted respectively on a pressure relief disk provided in an inner circumference of said stator and on a fixing disk provided on an outer end face of said flywheel, and said fixing disk is secured to said engine crankshaft through flywheel fastening bolts.

In the ring type starter/generator, cooling water paths are provided in said water pump housing.

In the ring type starter/generator, said stator comprises a ring shaped stator core, a fixing base plate, a clearance adjusting shim and a stator winding, said stator winding being wound on said stator core, said stator core being secured on an upper surface of said base plate through fixing holes, and said clearance adjusting shim being mounted on a lower surface of said base plate through installation openings; said rotor comprises a plurality of segmental permanent magnets with positioning holes, which are disposed alternately with N-S poles in turn in a special mold to be pressure cast with aluminum alloy and then completed by magnetization; and, said stator and said rotor of such construction constitutes a permanent magnet starter/generator of side ring type.

In the ring type starter/generator, said stator comprises a ring shaped stator core, a fixing base plate, a clearance adjusting shim and a stator winding, said stator winding being wound on said stator core, said stator core being secured on an upper surface of said base plate through fixing holes, and said clearance adjusting shim being mounted on a lower surface of said base plate through installation openings; said rotor comprises a rotor winding constituted of a circular inner conductive ring, a circular outer conductive ring and a plurality of conductive bars connecting the two conductive rings, one or a plurality of said windings being pressure cast with aluminum alloy or injection molded with plastics in a special mold to form a rotor; and, said stator and said rotor of such construction constitutes an induction starter/generator of side ring type.

In the ring type starter/generator, said stator is composed of a ring shaped stator core fabricated by lamination and stamping of silicon steel sheets and a winding via wire embedding and injection molding, slots for embedding wire being provided on an inner circumference of said stator core; said rotor comprises a plurality of pairs of segmental permanent magnets, which are fixed alternately with N-S poles in turn on an outer circumference of a ring shaped magneto-conductive core; and, said stator and said rotor of such construction constitutes an induction starter/generator of inner ring type.

In the ring type starter/generator, said stator comprises a ring shaped stator core, a fixing base plate, a clearance adjusting shim and a stator winding, said stator winding being wound on said stator core, said stator core being secured on an upper surface of said base plate through fixing holes, and said clearance adjusting shim being mounted on a lower surface of said base plate through installation openings; said rotor comprises two conductive rings of same diameter and a plurality of conductive bars connecting the two rings to form a rotor winding, said rotor winding being pressure cast with aluminum alloy in a special mold to form an induction rotor of inner ring type; and, said stator and said rotor of such construction constitutes an induction starter/generator of inner ring type.

In the ring type starter/generator, said stator comprises a fixing base plate, a clearance adjusting shim, two ring shaped stator core with different diameters and two windings, said two stator cores and two windings being fixed on an upper surface of said base plate, which are injection molded with plastics to form a fully enclosed multiple-parallel stator of side ring type; said rotor comprises two sets of pluralities of segmental permanent magnets with positioning holes, which are disposed alternately with N-S poles in turn in a special mold to be pressure cast with aluminum alloy to form a multiple-parallel permanent magnet rotor; and said stator and said rotor of such construction constitutes a multiple-parallel permanent magnet starter/generator of side ring type.

In the ring type starter/generator, said stator has windings of 36 slots, 12 poles, single-layered, chain-type and 3-phase, which are integrally assembled and injection molded with plastics to constitute said ring shaped stator; said rotor is a ring shaped permanent magnet rotor fabricated from 6 pairs of 12 segmental Nd-Fe-B permanent magnets by casting of aluminum alloy and magnetization; and, said stator and said rotor of such construction constitutes a permanent magnet starter/generator of side ring type.

In the ring type starter/generator, said stator is mounted on an end face of said pump housing; said rotor is a brushless rotor comprising 6 S-polarity cores and 6 N-polarity cores that are welded up by aluminum alloy to form a 12-pole U-shaped rotor magneto-conductive core, said U-shaped rotor magneto-conductive core being mounted on an end face of said pump impeller corresponding to said stator, an exciting winding of rotor being wound on an outer housing of a pump bearing provided within said U-shaped rotor magneto-conductive core; and, said stator and said rotor of such construction constitute a brushless exciting induction water pump starter/generator of inner ring type.

The ring type starter/generator of present invention provides following characteristics:
(1) With establishment of new concept in mechanical & electrical engineering and adoption of new design philosophy & method of analysis, the starter/generator of present invention consists of only a set of ring shaped stator and rotor and a set of low power consumption and big current-conversion controller. Together with an engine or water pump the starter/generator constitutes a wholly new integrated electro-mechanical ring type starter/generator without outboard shaft.
(2) The conventional mode of transmission, installation and construction of automobile starter/generator is altered. The starter/generator eliminates components such as main body, shaft, bearings, end cover and housing etc., and utilizes the shaft, bearing and housing in common with engine or water pump. It works coaxially with engine or water pump and directly drives or is driven by the latter, making the power plant composed of starter/generator and engine or pump more simplified, reasonable and compact, thoroughly eliminating the trouble of maintenance of electric machinery.
(3) Ring type starter/generator has following advantages: short axial length, large transmission torque, convenience in usage and installation, low production cost, no heat radiator needed, low working temperature, reliability in power transmission, long usage life etc.
(4) The stator is produced by special technological process as a wound core construction, and it may be formed as a 120°, 180°, 300° or 360° segmental part of a ring. On a same base plate two sets of stators with different diameters are installed, and on a same magnetic base plate two sets of permanent magnet rotor are installed, whereby a large power parallel ring type starter/generator with axial direction of magnetic flux in plane air gap is constituted.
(5) The ring type starter/generator constitutes an integrated construction with a water pump, eliminating air-cooled radiator for generator, housing, end cover, bearing etc. The ring shaped stator is mounted on housing of water pump, and it is cooled by circulation of water in pump, whereby the heat generated in stator is dissipated by circulating water. The ring shaped rotor is mounted on impeller of water pump, and the impeller is driven through a unidirectional clutch, such that the starter/generator is highly efficient, simple in construction and low in noise level. In this way efficiency of generator is greatly improved and its working temperature lowered. The axial magnetic attraction produced by ring type starter/generator can compensate for axial thrust force produced by water pump, and consequently usage life of pump is prolonged. Preferably, the scheme, in which ring type starter/generator is integrated with a water pump, is an ideal and perfect scheme, at the same time having the function electrically driven pump and high power water-cooled generator.
(6) Integrated construction of ring type starter/generator with engine, having function of starting and electric generation as a whole, is suitable to be adapted for various existing automotive engines with very little refurbishment. It can be readily amalgamated with existing engine into a new engine with integrated water circulating means, resulting in a highly efficient, environment protecting and energy saving engine with integrated electrical and mechanical means. It represents new tendency in development of highly efficient engine with environment protection and energy saving.
(7) An engine designed with integrated electrical and mechanical means of ring type starter/generator is highly efficient and energy-saving, it is provided with characteristics of high power starting and multi-voltage electric supply. In conjunction with 12V and 36V power supply system, water pump and air conditioner of engine can be all motor-driven and automatically controlled, and the engine can work without any belt and with low noise level and high reliability or economy, as well as improvement in usage life of engine as a whole. Thereby automobiles of 21st century can realize the application of highly efficient, environment protecting and energy-saving engine with capability of providing multiple voltages and integrated electrical and mechanical means.
(8) With such a set of ring type starter/generator for engine and a set of ring type starter/generator for water pump, it is possible to design an ideal hybrid-powered electromotive automobile, in which the starter assists the engine during starting or accelerating, such that the vehicle attains quickly at its economical speed. Thereafter, the starter works as a generator for power supply to charging of battery and other electric loading. The ring type starter/generator for hybrid power application has got a breakthrough in technical progress, i.e. maximum power of the ring type starter/generator achieves 50 kW. Through testing it shows that with same volume torque ratio and power ratio of said starter/generator is larger than conventional unit. The torque ratio is more than 5.4 N.m/kg, power ratio is more than 2.8 kW/kg, torque constant achieves 0.96 N.m/A, and fluctuation rate of electromotive induction of generator is 2 %. Above said technical parameters have achieved leading level in the world.

The use of ring type starter/generator and unidirectional clutch in rotor flywheel solves the problems: 1) large axial attractive force in air gap between end plane faces of stator and rotor of ring type starter/generator is overcome; 2) engine and ring type starter/generator achieve a unloading and coaxial loading coupling, so that engine and starter/generator can separately or simultaneously drive the vehicle. When the automobile is starting or running at low speed (or running solely by electric power), the automobile is driven by rotor of starter/generator (flywheel of engine), rotor of ring type starter/generator (flywheel of engine) disengages from crankshaft of engine by means of unidirectional clutch. When the engine stops running, and the automobile solely runs by electricity, cooling water in stator of generator also stops to circulate due to shutdown of engine. At that time, the starter/generator drives the pump, so that cooling water in engine and stator of generator continues to circulate for heat dissipation, ensuring normal operation of generator. As soon as the engine starts working again, electric supply to control solenoid of permanent magnet coupling of unidirectional clutch is switched on, and under the action of repelling force of same polarity, permanent magnet coupling makes the crankshaft of engine to be tightened with flywheel, and the flywheel drives the crankshaft to start the engine running. After starting the engine drives the automobile together with starter/generator under hybrid-powered mode of running. At that time, motor-driven water pump stops working, pump impeller is driven by belt and pulley of engine, and again the starter turns into a generator for supplying 12 V or higher voltage electricity to charge the battery and other electric load. When the automobile decelerates, kinetic energy of inertia transmits to flywheel through wheel, gearbox and clutch in reverse, so that the flywheel turns the rotor at high speed, resulting in generation of electricity for supply to battery charging. At that time, engine crankshaft begins to run at low speed or stops running, unloading the dragging load of engine during deceleration, enhancing thereby recovery of energy at deceleration of automobile.

### BRIEF DESCRIPTION OF THE DRAWINGS

FIG.1 is a front view of ring shaped stator;
FIG.2 is a sectional view taken along line A-A in FIG.1;
FIG.3 is a front view of ring shaped permanent magnet rotor;
FIG.4 is a top view of FIG.3;
FIG.5 is a front view of ring shaped induction rotor;
FIG.6 is a top view of FIG. 5;
FIG.7 is a schematic view of the structure of 300° ring shaped stator core;
FIG.8 is a schematic view of installation of 360° ring shaped stator core and winding;
FIG.9 is a schematic view of the structure of starter/generator of inner ring type;
FIG. 10 is a sectional view taken along line B-B in FIG.9;
FIG. 11 is a front view of ring shaped parallel stator of side ring type;
FIG.12 is a sectional view taken along line C-C in FIG. 11;
FIG. 13 is a schematic view of the structure of parallel permanent magnet rotor of side ring type;
FIG.14 is a sectional view taken along line E-E in FIG. 13;
FIG. 15 is a schematic view of the structure of ring type starter/generator for engine;
FIG.16 is a schematic diagram of control circuitry for ring type starter/generator;
FIG. 17 is a schematic view of the structure of ring type starter/generator using unidirectional clutch in rotor and flywheel;
FIG.18 is a schematic view of the structure of ring type starter/generator of side ring type for water pump; and
FIG.19 is a schematic view of the structure of brushless excited starter/generator of inner ring type for water pump.

### DESCRIPTION OF PREFERRED EMBODIMENTS

In the figures:
1 - stator; 2 - permanent magnet rotor; 3 - induction rotor; 4 - stator core;
5 - fixing base plate; 6 - clearance adjusting shim; 7 - permanent magnet;
8 - rotor winding; 9 - stator winding; 10 - magneto-conductive core;
11 - installation opening; 12 - fixing holes; 13 - slots for wire embedding;
14 - aluminum alloy; 15 - inner conductive ring;
16 - outer conductive ring; 17 - conductor bar; 18 - control circuitry;
19 - MOSFET grid-drive circuitry; 20 - engine cylinder body;
21 - engine crankshaft; 22 - engine flywheel; 23 - clutch;
24 - engine flywheel housing; 25 - gearbox; 26 - gearbox shaft;
27 - pump impeller; 28 - electromagnetic control solenoid;
29 - permanent magnet coupling;
30 - water pump housing cooling water path;
31 - pump impeller; 32 - water pump shaft; 33 - water pump housing;
34 - flywheel fixing bolts; 35 - fixing disk; 36 - pressure relief disk;
37 - water pump bearing; 38 - bearing; 39 - installation holes;
40 - reset spring; and 41 - unidirectional clutch.

Ring type starter/generator of the present invention consists of a ring shaped stator 1, a ring shaped permanent magnet rotor 2 (or induction rotor 3), and a set of low power consumption and large current-conversion controller. In case ring shaped stator 1 is mounted on engine body or on flywheel housing, and ring shaped rotor 2 (or induction rotor 3) mounted on flywheel of engine, a ring type starter/generator of permanent magnet or induction motor type is constituted. In case ring shaped stator 1 is mounted on pump housing and ring shaped rotor 2 (or induction rotor 3) mounted on pump impeller, a ring type starter/generator of permanent magnet or induction pump type is constituted. In the new integrated mechanical/electrical construction formed from shaft, bearing and housing parts of engine or pump, the starter/generator and the engine or pump will operate coaxially and directly drive each other.

According to structure of installation said ring type starter/generator has different mode of combination: namely, side ring type, inner ring type, parallel connection type, and types of multiple sets of stators and rotors.

Starter/generator of side ring type is essentially constituted of a set or several sets of stator 1 and permanent magnet rotor 2 or induction rotor 3, forming a ring type starter/generator with plane air gap and axial direction of magnetic flux.

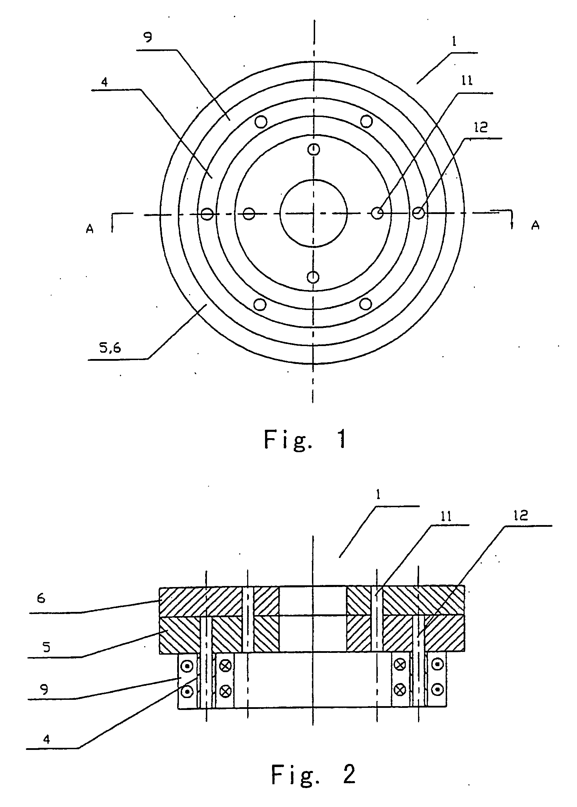

As shown in FIG. 1 & 2, ring shaped stator 1 is constituted of ring shaped stator core 4 (core with slots in single face, core with slots in both faces or core without slots), fixing base plate 5, clearance adjusting shim 6, stator winding 9 (with different modes of winding). Stator winding 9 is wound on stator core 4, which is secured on upper surface of base plate 5 through fixing holes 12. Shim 6 for adjusting clearance is mounted on lower surface of base plate 5 through installation opening 11. Stator core 4 may be formed as a 120°, 180°, 300° or 360° segmental part of a ring.

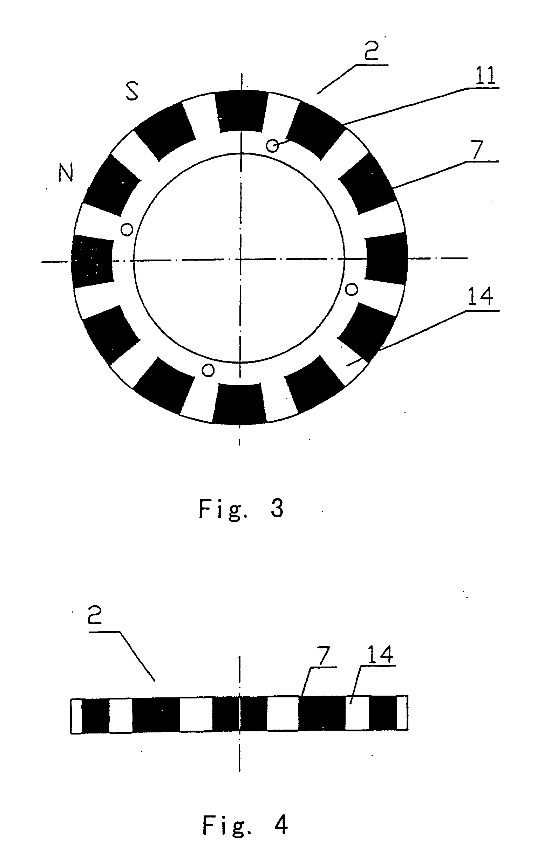

As shown in FIG. 3 & 4, the ring shaped permanent magnet rotor 2 consists of a plurality of segmental (or circular etc.) permanent magnets 7 (with positioning holes), which are disposed alternately with N-S end in turn in a special purpose fixture to be injection molded with aluminum alloy 14 (or high strength plastics), resulting in a permanent magnet rotor 2 and finally magnetized for use. Installation holes 11 are provided in aluminum alloy part 14.

Above said ring shaped stator 1, as shown in FIG. 1 & 2, is mounted on engine body and flywheel housing or on end face of pump housing, and the permanent magnet rotor 2, as shown in FIG. 3 & 4, is mounted on engine flywheel or on end face of pump impeller, so that stator 1 and permanent magnet rotor 2 together with engine or pump constitute a permanent magnet starter/generator of side ring type with plane air gap and axial direction of magnetic flux.

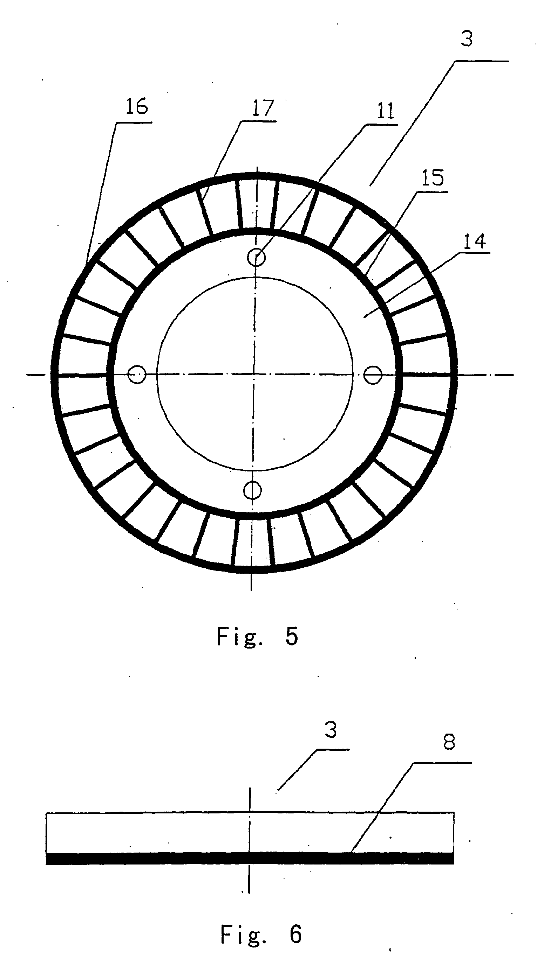

As shown in FIG. 5 & 6, the induction rotor 3 of side ring type comprises a circular inner conductive ring 15, a circular outer conductive ring 16 and a plurality of conductive bars 17 connecting the two rings, which form a rotor winding 8. Rotor winding 8 of side ring type can be made by welding copper or aluminum bars together. After welding a set or several sets of winding 8 are disposed in a special purpose die to be pressure cast with aluminum alloy or injection molded with plastics, resulting in an induction rotor 3. Said induction rotor 3 together with the stator 1 of side ring type, as shown in FIG. 1 & 2, constitutes an induction generator of side ring type.

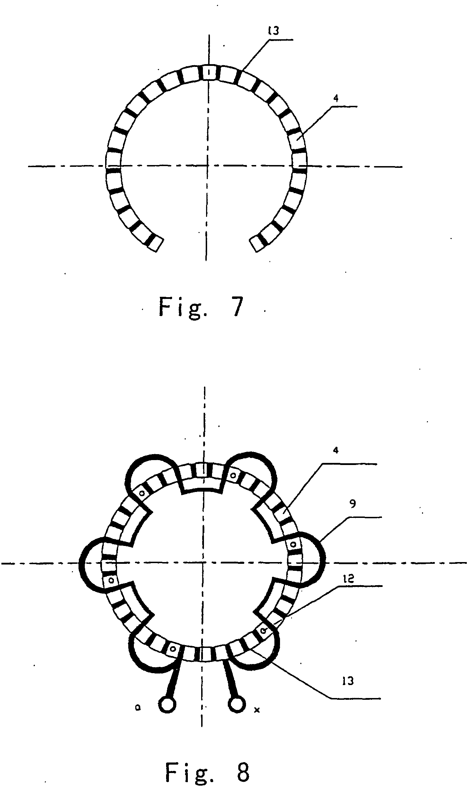

FIG. 7 shows a 300° ring shaped stator core 4, provided with slots 13 for embedding of wire and made by winding of strips punched from silicon steel sheet.

FIG. 8 shows another 360° ring shaped stator core 4, which is made by winding of silicon steel strips with punched slots or by butt welding of semicircular laminated sheets with fixing holes 12. Winding 9 is made by special fixture and high precision winding machine, and embedded into slots 13 in end face of stator core. After assembly winding 9 is injection molded in a special mold to form a fully enclosed stator 1.

Starter/generator of inner ring type is a permanent magnet rotor 2 or induction rotor 3, running in a ring shaped stator 1.

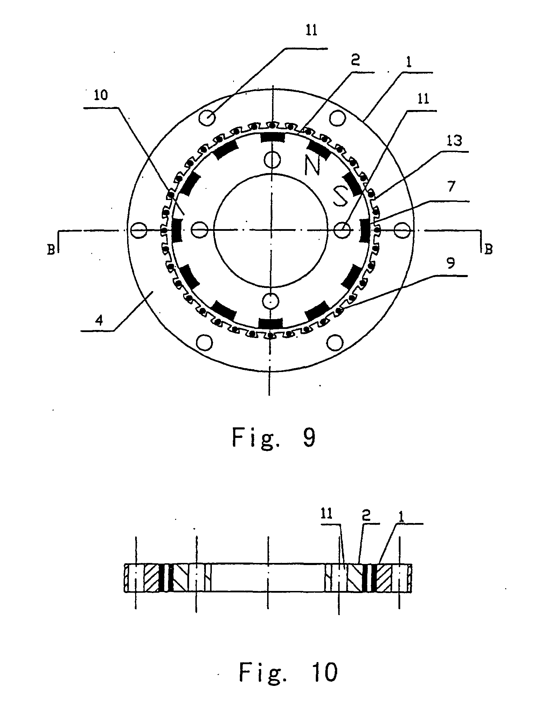

FIG. 9 & 10 shows a permanent magnet generator of inner ring type, in which ring shaped stator 1 is mounted directly on engine body and flywheel housing or on pump housing, and ring shaped permanent magnet rotor 2 mounted on engine flywheel or pump impeller, constituting a permanent magnet starter/generator of inner ring type. In said generator, ring shaped stator 4, made from laminated silicon steel sheet by punching, together with winding 9 is injection molded after wire embedding, forming a fully enclosed ring shaped stator 1. Slots 13 for embedding of wire are provided on the inner circumference of stator core 4. A plurality of pairs of segmental permanent magnets 7 are secured alternately with N-S poles in turn on outer circumference of ring shaped magneto-conductive core 10, forming a ring shaped permanent magnet rotor 2. Magneto-conductive core 10 can also be made by lamination of punched silicon steel sheets. Magneto-conductive core 10 is provided with trapezoidal slots for injecting aluminum and installing permanent magnet. The core is fitted into trapezoidal permanent magnet 7 after aluminum injection, thus forming a permanent magnet rotor 2 of inner ring type.

In induction starter/generator of inner ring type, the ring shaped induction rotor 3 comprises two circular conductive rings 15 and 16 of same diameter and a plurality of conductive bars 17 connecting the two rings, which form a rotor winding 8. The rotor winding 8 is made of welded copper or aluminum bars, and after welding it is disposed in a special purpose mold to be cast with aluminum or injection molded with plastics to constitute an induction rotor 3 of inner ring type. Said induction rotor is to be mounted on engine flywheel or pump impeller, and together with the ring shaped stator 1 mounted on engine flywheel housing or pump housing it constitutes an induction starter/generator of inner ring type.

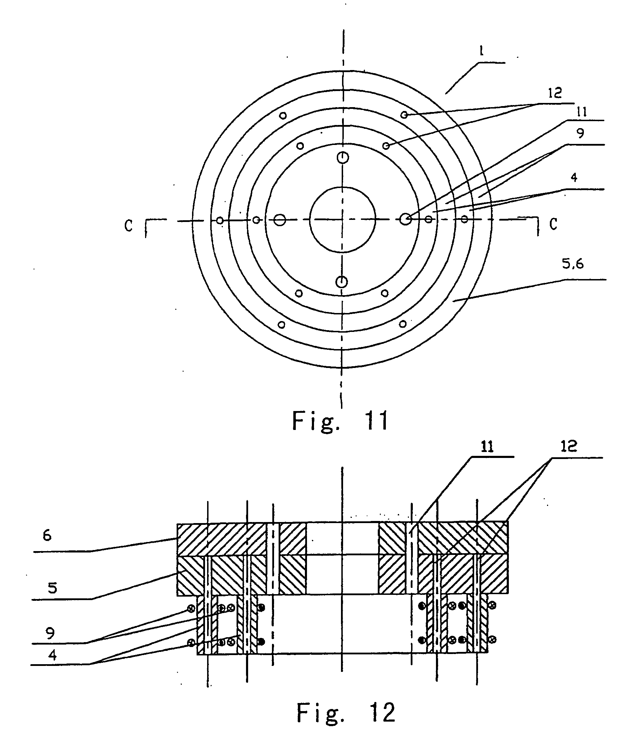

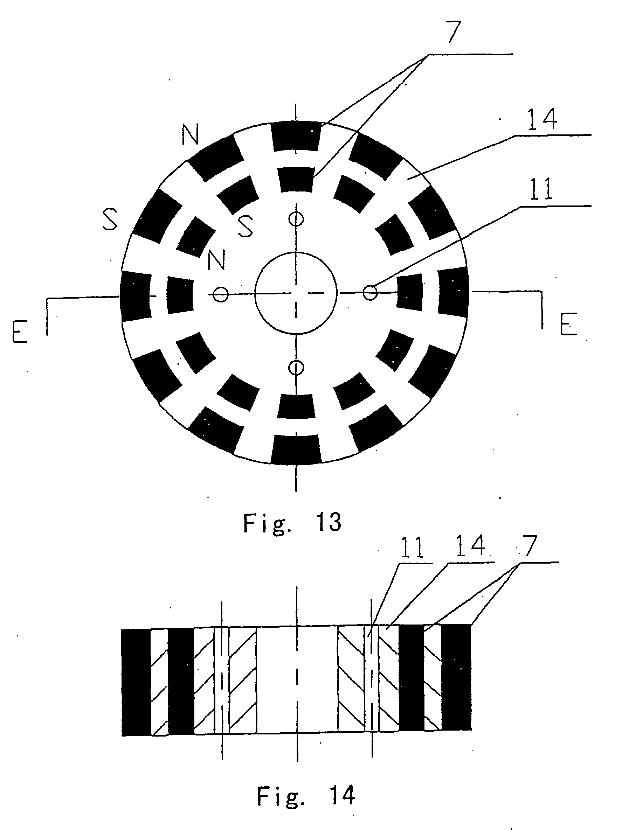

FIG. 11 & 12 shows the construction of multiple-parallel stator 1 of side ring type, which comprises fixing base plate 5, shim 6 for adjusting clearance, two sets of ring shaped stator cores with different diameters and two sets of windings 9. The two sets of stators and two sets of windings are secured to upper surface of base plate 5, and then injection molded to constitute a fully enclosed multiple-parallel stator 1 of side ring type.

FIG. 13 & 14 shows the construction of multiple-parallel permanent magnet rotor 2 of side ring type, which comprises two sets of segmental (or circular or of other shape) permanent magnets 7, disposed alternately with N-S poles in turn in a special purpose mold and then pressure cast with aluminum alloy (or injection molded with high strength plastics) to constitute a multiple-parallel permanent magnet rotor 2. Finally said rotor is magnetized, and finished as a parallel permanent magnet rotor 2 of side ring type.

Aforementioned stator 1 is mounted on end surface of engine body, two sets of stator windings work in a parallel manner, and rotor 2 is mounted on end surface of engine flywheel. Said parallel stators 1 and parallel permanent magnet rotors 2 together constitute a special multiple-parallel permanent magnet starter/generator of side ring type.

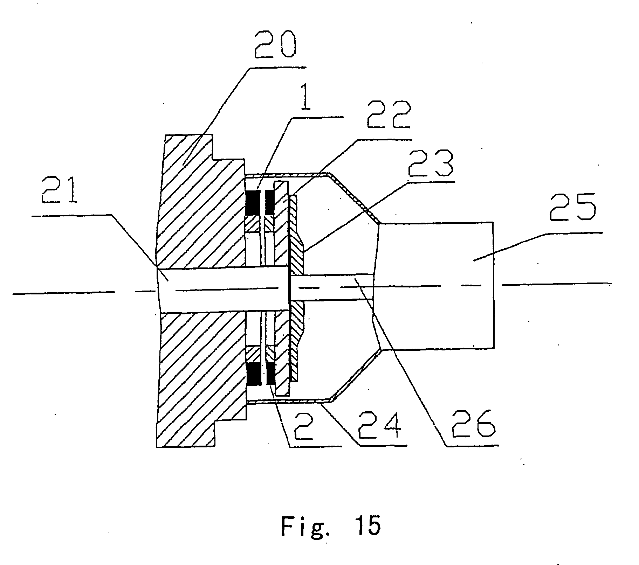

FIG. 15 shows a ring type permanent magnet (or induction) starter/generator for use in engine, in which stator 1 applies winding construction of 36 slots, 12 poles, single-layered, chain-type, 3-phase winding (or of other mode), and is injection molded to constitute an integral ring shaped stator 1. Said stator 1 may also apply winding construction with combined starter/generator winding or with multiple windings. The stator 1 is mounted on rear end face of engine cylinder body 20. Ring shaped permanent magnet rotor 2 comprises 6 pairs (12 pieces) of Nd-Fe-B permanent magnets 7, and is injected with aluminum and magnetized to form a ring shaped permanent magnet rotor 2. Said rotor 2 is mounted on front end face of flywheel 22. Said stator 1 and said rotor 2 are disposed in a state of facing each other. Relative position of stator 1 and permanent magnet rotor 2 is adjusted, so that a predetermined radial air gap is ensured and direction of magnetic flux is axial.

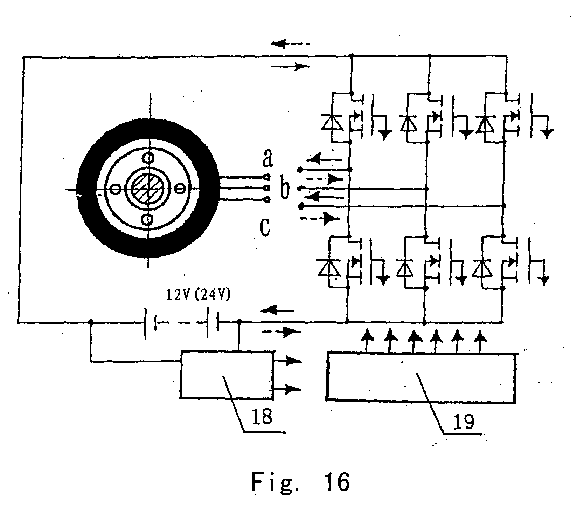

As shown in FIG. 16, ring type starter/generator of present invention comprises a set of semi-conductor power current-conversion controller of low power consumption and large current, including a control circuitry 18 and MOSFET grid-driven circuitry 19. When the engine is starting, said circuitry converts 12 V (or 24 V) DC current of automobile system to 3-phase ac current in reverse, supplying to 3-phase winding of stator 1 for generation of alternating magnetic field, whereby said permanent magnet rotor 2(or induction rotor 3) and flywheel rotate in the working direction of engine. The engine is started and begins to operate in a short time, and direction of electric current during starting is shown in FIG.16 as arrowhead in solid line. After completion of starting, the engine turns into normal operation, and permanent magnet rotor 2 and flywheel 22 continue to rotate in the direction of starting, so that stator 1 is induced to generate 3-phase AC current. At that time, utilizing the reversing characteristics of MOSFET circuitry and under the action of grid-drive signal, electric current flows from leakage pole to source pole (D→S), whereby the semi-conductor power current-conversion controller works again as a 3-phase fully controlled rectifying voltage-regulating circuitry and turns the 3-phase AC current of stator 1 output through rectification and voltage regulation into DC current, supplying for the load of battery and other automobile appliance. Direction of output current of the generator is shown as arrowhead in dotted line in FIG.16.

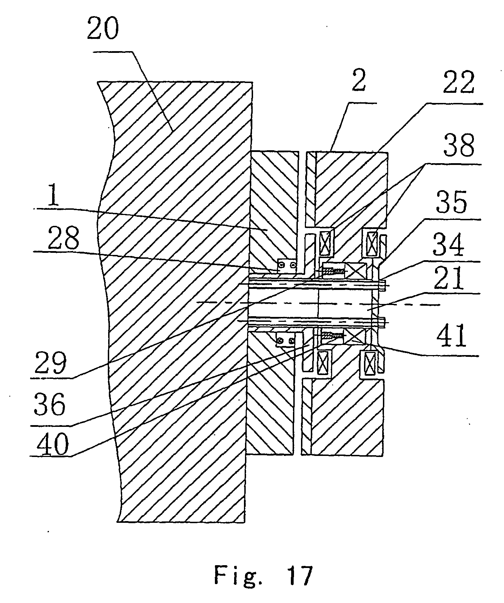

FIG. 17 shows a construction for ring type starter/generator using unidirectional clutch in flywheel or rotor. The rotor 2 is mounted on end face of flywheel 22. The flywheel 22 is mounted through unidirectional clutch 41, permanent magnet coupling 29 and reset spring 40 on engine crankshaft 21. Electromagnetic control solenoid 28 is disposed on end face of stator 1. Unidirectional clutch 41 carries out the functions of wedge-tightening and separation by means of the repelling force of same polarity between said electro-magnetic solenoid 28 and permanent magnet coupling 29. On the two end faces of flywheel 22 are disposed respectively bearings 38, which are mounted respectively on pressure relief disk 36 at inner circumference of stator 1 and on fixing disk 35 at end face of flywheel. Fixing disk 35 is secured to engine crankshaft 21 through fastening bolts 34 of flywheel, and such construction overcomes the axial attraction produced in plane air gap between stator 1 and rotor 2.

When the automobile is running at low speed after starting, unidirectional clutch 41 separates the connection between engine flywheel 22 and crankshaft 21, whereby the engine is unloaded, and the automobile is run by ring shaped rotor 2 (or rotor 3) of starter/generator, while engine crankshaft 21 is stopped. When engine is demanded to be started, electromagnetic control solenoid 28 is switched on to generate magnetic field of same polarity as permanent magnet coupling 29, so that under repelling force of same polarity of permanent magnet coupling 29 and electromagnetic control solenoid 28, the permanent magnet 29 engages unidirectional clutch 41 with engine crankshaft 21. At that time, rotating engine flywheel 22 drives crankshaft 21 to rotate together, and the engine starts and begins to run normally. Under tightening action of unidirectional clutch 41, crankshaft 21 again drives flywheel to rotate together, and drives thereby the automobile to run. During deceleration of automobile, electromagnetic control solenoid 28 cuts off power supply, and permanent magnet coupling 29 under action of reset spring 40 returns back to separate unidirectional clutch 41 again from engine crankshaft 21, and inertial kinetic energy transmits through wheel, gearbox, and clutch to flywheel 22 in reverse, so that flywheel 22 rotates at high speed and induces the stator 1 to generate electricity for charging battery. At that time, engine crankshaft 21 runs at low speed or stops running, whereby unloading the engine during deceleration and enhancing energy recovery of automobile during deceleration.

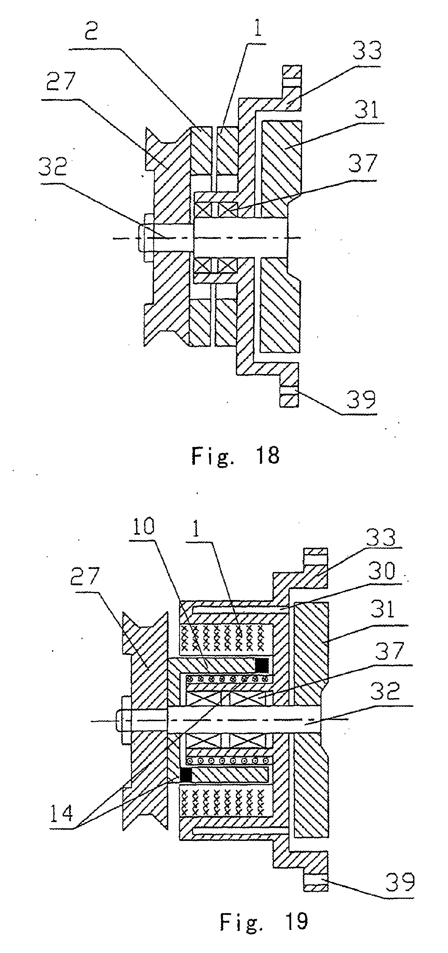

FIG. 18 is a schematic view of construction of pump starter/generator of side ring type. The 3-phase stator 1 is mounted on end face of pump housing 33, and permanent magnet rotor 2 mounted on end face of pump impeller 27 corresponding to said stator 1, whereby constituting a 3-phase permanent magnet starter/generator of side ring type with radial air gap and axial direction of magnetic flux. When engine drives pump impeller 27 to rotate, stator 1 is induced to generate 3-phase AC current as output. When automobile runs solely on electric power, starter/generator for pump drives pump to circulate the water. Since stator 1 is directly fixed on pump housing 33, circulating water carries off heat produced by stator 1. Thus, a water-cooled starter/generator is constituted, and the working temperature of ring type starter/generator is rather low. Elimination of generator housing, end cover, bearings, shaft and air cooling device will greatly simplify the construction and reduce production cost. Consequently, said water-cooled starter/generator for pump is highly efficient and less noisy with low working temperature and simple, reasonable and compact construction.

FIG. 19 shows a brushless excited starter/generator of inner ring type for pump. Stator 1 is mounted on end face of pump housing 33, which is designed with cooling water path 30. Brushless induction rotor 3 comprises 6 magnet cores of S-polarity and 6 magnet cores of N-polarity, and is welded together by aluminum alloy 14 (or other non-magnetic material) to form a 12-pole U-shaped rotor magneto-conductive core 10. U-shaped rotor magneto-conductive core 10 is mounted on end face of pump impeller 27 corresponding to stator 1, constituting an induction rotor 3. Exciting winding of rotor 3 is wound on outer housing of pump bearing within U-shaped rotor magneto-conductive core 10, constituting a brushless excited induction starter/generator of inner ring type for pump. When pump impeller 27 rotates, it drives U-shaped rotor magneto-conductive core 10 to turn also, so that stator 1 is induced to generate 3-phase AC current as output. Thus, another type of water cooling brushless excited starter/generator is constituted, wherein it performs simultaneously the function of motor-driven pump and large power generator.

Although with reference of appended drawings preferred embodiments of present invention have been described, but present invention is not limited to these embodiments illustrated. For those skilled in related trade, it is apparent that without deviation from the scope and spirit of present invention there are many variations and modifications. Hence the scope of present invention is defined only by appended Claims.

## Claims

1. A ring type starter/generator, comprising:
a ring shaped stator (1),
a ring shaped rotor (2, 3), and
an engine or water pump,
**characterized in that**
said stator (1) is mounted on an engine body (20) or a housing (24) of a flywheel (22) of said engine or on a housing (33) of said water pump, said rotor (2, 3) is mounted on said flywheel (22) of said engine or on a impeller (27) of said water pump, said stator (1) faces said rotor (2, 3), and said starter/generator further comprises a set of large current-conversion controller with low power consumption, which includes a control circuitry (18) and a MOSFET grid-drive circuitry (19).

2. A ring type starter/generator as defined in Claim 1, **characterized in that** said engine flywheel (22) is mounted on an engine crankshaft through an unidirectional clutch (41), a permanent magnet coupling (29) and a reset spring (40), an electro-magnetic control solenoid (28) is provided on an end face of said stator (1), and said unidirectional clutch (41) achieves the engagement and disengagement under the action of a like-polarity repelling force between said electromagnetic control solenoid (28) and said permanent magnet coupling (29); and, two end faces of said flywheel are provided with bearings (38) respectively, seats of said bearings (38) are mounted respectively on a pressure relief disk (36) provided in an inner circumference of said stator (1) and on a fixing disk (35) provided on an outer end face of said flywheel, and said fixing disk (35) is secured to said engine crankshaft (21) through flywheel fastening bolts (34).

3. A ring type starter/generator as defined in Claim 1, **characterized in that** cooling water paths (30) are provided in said water pump housing (33).

4. A ring type starter/generator as defined in any one of Claims 1-3, **characterized in that** said stator (1) comprises a ring shaped stator core (4), a fixing base plate (5), a clearance adjusting shim (6) and a stator winding (9), said stator winding (9) being wound on said stator core (4), said stator core (4) being secured on an upper surface of said base plate (5) through fixing holes (12), and said clearance adjusting shim (6) being mounted on a lower surface of said base plate (5) through installation openings (11); said rotor (2) comprises a plurality of segmental permanent magnets (7) with positioning holes, which are disposed alternately with N-S poles in turn in a special mold to be pressure cast with aluminum alloy (14) and then completed by magnetization; and, said stator (1) and said rotor (2) of such construction constitutes a permanent magnet starter/generator of side ring type.

5. A ring type starter/generator as defined in any one of Claims 1-3, **characterized in that** said stator (1) comprises a ring shaped stator core (4), a fixing base plate (5), a clearance adjusting shim (6) and a stator winding (9), said stator winding (9) being wound on said stator core (4), said stator core (4) being secured on an upper surface of said base plate (5) through fixing holes (12), and said clearance adjusting shim (6) being mounted on a lower surface of said base plate (5) through installation openings (11); said rotor (3) comprises a rotor winding (8) constituted of a circular inner conductive ring (15), a circular outer conductive ring (16) and a plurality of conductive bars (17) connecting the two conductive rings, one or a plurality of said windings (8) being pressure cast with aluminum alloy or injection molded with plastics in a special mold to form a rotor (3); and, said stator (1) and said rotor (2) of such construction constitutes an induction starter/generator of side ring type.

6. A ring type starter/generator as defined in any one of Claims 1-3, **characterized in that** said stator (1) is composed of a ring shaped stator core (4) fabricated by lamination and stamping of silicon steel sheets and a winding (9) via wire embedding and injection molding, slots (13) for embedding wire being provided on an inner circumference of said stator core (4); said rotor (2) comprises a plurality of pairs of segmental permanent magnets (7), which are fixed alternately with N-S poles in turn on an outer circumference of a ring shaped magneto-conductive core (10); and, said stator (1) and said rotor (2) of such construction constitutes an induction starter/generator of inner ring type.

7. A ring type starter/generator as defined in any one of Claims 1-3, **characterized in that** said stator (1) comprises a ring shaped stator core (4), a fixing base plate (5), a clearance adjusting shim (6) and a stator winding (9), said stator winding (9) being wound on said stator core (4), said stator core (4) being secured on an upper surface of said base plate (5) through fixing holes (12), and said clearance adjusting shim (6) being mounted on a lower surface of said base plate (5) through installation openings (11); said rotor (3) comprises two conductive rings (15, 16) of same diameter and a plurality of conductive bars (17) connecting the two rings to form a rotor winding (8), said rotor winding (8) being pressure cast with aluminum alloy in a special mold to form an induction rotor (3) of inner ring type; and, said stator (1) and said rotor (3) of such construction constitutes an induction starter/generator of inner ring type.

8. A ring type starter/generator as defined in any one of Claims 1-3, **characterized in that** said stator (1) comprises a fixing base plate (5), a clearance adjusting shim (6), two ring shaped stator core (4) with different diameters and two windings (9), said two stator cores (4) and two windings (9) being fixed on an upper surface of said base plate (5), which are injection molded with plastics to form a fully enclosed multiple-parallel stator (1) of side ring type; said rotor (2) comprises two sets of pluralities of segmental permanent magnets (7) with positioning holes, which are disposed alternately with N-S poles in turn in a special mold to be pressure cast with aluminum alloy (14) to form a multiple-parallel permanent magnet rotor (2); and said stator (1) and said rotor (2) of such construction constitutes a multiple-parallel permanent magnet starter/generator of side ring type.

9. A ring type starter/generator as defined in any one of Claims 1-3, **characterized in that** said stator (1) has windings of 36 slots, 12 poles, single-layered, chain-type and 3-phase, which are integrally assembled and injection molded with plastics to constitute said ring shaped stator (1); said rotor (2) is a ring shaped permanent magnet rotor fabricated from 6 pairs of 12 segmental Nd-Fe-B permanent magnets (7) by casting of aluminum alloy and magnetization; and, said stator (1) and said rotor (2) of such construction constitutes a permanent magnet starter/generator of side ring type.

10. A ring type starter/generator as defined in Claims 1 or 3, **characterized in that** said stator (1) is mounted on an end face of said pump housing (33); said rotor (3) is a brushless rotor (3) comprising 6 S-polarity cores and 6 N-polarity cores that are welded up by aluminum alloy (14) to form a 12-pole U-shaped rotor magneto-conductive core (10), said U-shaped rotor magneto-conductive core (10) being mounted on an end face of said pump impeller (27) corresponding to said stator (1), an exciting winding of rotor (3) being wound on an outer housing of a pump bearing provided within said U-shaped rotor magneto-conductive core (10); and, said stator (1) and said rotor (3) of such construction constitute a brushless exciting induction water pump starter/generator of inner ring type.
